# EUROPEAN PATENT APPLICATION

(11) **EP 4 847 314 A1**
(43) Date of publication of application: **02.12.2026**
(21) Application number: 25179942.5
(22) Date of filing: 30.05.2025
(51) Int. Cl.: B60P 1/28, B60P 1/64

(54) **CARRIER ADAPTER**

(71) Applicant: Wennerstrand, Matthias, 673 92 Charlottenberg (SE); Wallander, Mikael, 133 34 Saltsjöbaden (SE)
(72) Inventor: Wennerstrand, Matthias, 673 92 Charlottenberg (SE); Wallander, Mikael, 133 34 Saltsjöbaden (SE)
(74) Representative: KIPA AB

(57) **Abstract**

A device (1) for adapting a carrier (2) with wheels and a crane (3) to various uses is disclosed. The device (1) comprises a base attachment (4) adapted to be fixed to a container platform (5). The device (1) further comprises an attachment part (6) pivotably arranged to the base attachment (4), wherein the attachment part (6) comprises a locking part (7) for fixing a hooklift container to the device (1) in at least one direction.

## Description

### TECHNICAL FIELD

The present invention relates to a device and a system for adapting a carrier with wheels and a crane to various uses.

### BACKGROUND

A container carrier with wheels and a crane is generally a flatbed truck or trailer designed to transport containers. The key component is the crane, typically mounted on the vehicle, used for loading and unloading the container.

In other words, a container carrier with wheels and a crane is typically a truck or trailer chassis specifically designed to transport intermodal containers and is equipped with a mounted crane (often called a loader crane or truck-mounted crane). These setups allow for independent loading and unloading of standard containers, without needing external lifting equipment like reach stackers or forklifts.

During transport, the vehicle has a flatbed or skeletal chassis designed to carry ISO containers (e.g., 20 ft or 40 ft).

It's equipped with twist locks or similar securing systems to hold the container in place during transport.

During loading/unloading with the crane; the crane, mounted on the truck (usually behind the cab), is used to lift containers on or off the vehicle.

The crane uses chains, slings, or container spreaders attached to the container's corner castings.

The vehicle could deploy hydraulic outriggers to stabilize itself during lifting operations.

The crane can precisely place the container on the ground, onto a foundation, or even over obstacles (e.g., fences, ditches).

It can also retrieve containers from the ground or stack them if the crane has sufficient reach and capacity.

Typical applications could be delivery of tool containers, site offices, or storage units to areas where lifting infrastructure is unavailable. Precision placement in tight or uneven terrain. Transport and deployment of generator units, communication cabinets, or mobile substations. Setup of pop-up shops, event containers, or temporary facilities. In remote locations they enable drop-off and pick-up of containers in areas without cranes or forklifts (e.g., rural or undeveloped sites).

While these trailers and trucks offer considerable versatility in their standard configuration, there are situations where additional capabilities or adaptations are required to meet more specialized operational needs.

### SUMMARY

It is thus an object of the present invention to provide a system and a device for increasing the versatility of such trailers and trucks.

According to a first aspect of the present disclosure a device for adapting a carrier with wheels and a crane to various uses is provided. The device comprises a base attachment adapted to be fixed to a container platform., wherein the device further comprises an attachment part pivotably arranged to the base attachment, wherein the attachment part comprises a locking part for fixing a hooklift container to the device in at least one direction.

Thus, with the above device, a hooklift container can be tilted using a crane, i.e., without a hooklift. In other words, a container platform is equipped with a device according to the above and that is fixed to the rear end of a hooklift container. For tilting the container, the crane, for instance, via cargo straps, lifts the front end of the container that has its rear end attached to the device.

Generally, a standard hooklift system can tilt containers by lifting the front end of the container while the rear remains on the ground (supported by rollers). This creates a steep angle that allows the container's contents to slide out by gravity. With the device of the present disclosure, the front end is lifted, and the container is tilted with the rear end of the container still on the container platform.

Common materials unloaded by tilting a hooklift container comprise construction waste such as concrete rubble, bricks, demolition debris, and asphalt chunks. Other materials could be soil, sand, gravel, and mulch used regularly when landscaping. Further examples are scrap metal, wood waste, household or commercial refuse, and compostable organic waste.

In other words, the versatility of a container platform with a crane is increased with the advantages of hooklift system, for instance, no manual unloading required, fast turnaround at dump sites, safer and more efficient for heavy or awkward loads, and works well even in areas without unloading infrastructure.

According to one aspect of the present disclosure, hinges are arranged to connect the base attachment and the attachment part to make the attachment part pivotable in relation to the base attachment.

Benefits of using hinges include precise axis of rotation, they are generally mechanically simple and reliable and can withstand repeated movement. An alternative could be, for instance, torsion springs.

According to a further aspect of the present disclosure, the base attachment is an elongate beam adapted to be arranged transverse to the moving direction of the carrier. The elongate beam has preferably holes at each end such that the beam can be fixed to the container platform with twistlocks or similar devices and potentially in combination with locking/locating pins.

According to yet a further aspect of the present disclosure, the attachment part comprises a flat part for supporting a part of a lower side of a container. The flat part is configured to support a portion of a lower side of the container such that, when the container returns from a tilted position to a non-tilted or level position, the resulting contact force exerted by the container on the flat part causes the device to rotate back toward its original orientation.

According to a further aspect of the present disclosure with a flat part, an end plate is arranged at one end of the flat part and at an angle towards one another. Preferably, the flat part and the end plate are arranged at an angle relative to one another, most preferably at approximately 90 degrees, corresponding to the typical geometry of the bottom rear edge of a standard container. The end plate is thereby configured to engage the rear edge of the container and provide additional mechanical support, effectively preventing the container from sliding rearward relative to the flat part during use.

According to another aspect of the present disclosure, the attachment part has at least one protrusion for entering an end opening in a rail under a container. The at least one protrusion is configured to engage with a corresponding end opening of a rail structure located beneath the container, thereby forming a positive mechanical interface that restricts lateral movement of the rear portion of the container. This engagement enhances positional stability and prevents unintended sideways displacement of the container, thereby contributing to improved operational safety during transport or handling.

According to an alternative aspect of the present disclosure, an end plate is arranged to be supporting a rear end of a container and wherein the end plate further comprises two protrusions for entering the end openings in the rails under a container. Hence, the end plate is thereby configured to engage the rear edge of the container and provide additional mechanical support, effectively preventing the container from sliding rearward relative to the flat part during use and the two protrusions are configured to engage with corresponding end openings of a rail structure located beneath the container, thereby forming a positive mechanical interface that restricts lateral movement of the rear portion of the container. This engagement enhances positional stability and prevents unintended sideways displacement of the container, thereby contributing to improved operational safety during transport or handling.

According to a further aspect of the present disclosure, the locking device comprises two elongate rods arranged at a distance from each other and in line with each other and movable in the longitudinal direction of the rods. The elongate rods are configured to be linearly displaceable along their respective longitudinal axes and are dimensioned and positioned to be insertable into corresponding recesses formed in rail structures extending in the longitudinal direction beneath the container, from the front end toward the rear end thereof. Upon insertion into these recesses, the elongate rods form a mechanical interlock that secures the container to the attachment part, thereby preventing relative movement between the container and the underlying support structure during transport or handling operations.

According to an aspect of the present disclosure, the attachment part comprises guiding flanges for facilitating correct placement of a hooklift container to be carried in the center. The guiding flanges are configured to engage with lateral portions of the container during placement, thereby assisting in centering the hooklift container relative to the attachment part. By providing lateral guidance, the flanges promote proper alignment of the container during loading and positioning operations, thereby enhancing positional accuracy and contributing to the secure and stable placement of the container on the attachment part.

According to another aspect of the present disclosure, a system for adapting a carrier with wheels and a crane to various uses is provided. The system comprises a device according to any of the above aspects and also further comprises guiding flanges to be arranged on a container platform in front of said device. These guiding flanges are also configured to engage with lateral portions of the container during placement, thereby assisting in centering the hooklift container. By providing lateral guidance, the flanges promote proper alignment of the container during loading and positioning operations, thereby enhancing positional accuracy and contributing to the secure and stable placement of the container.

It should be emphasized that the term "comprises/comprising" when used in this specification is taken to specify the presence of stated features, integers, steps or components but does not preclude the presence or addition of one or more other features, integers, steps, components or groups thereof.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 is a perspective view of a system according to the present disclosure.
Figure 2 is a schematic sideview of a carrier with a system according to the present disclosure mounted on it.
Figure 3 is a schematic perspective view of the carrier and system of figure 2 with container rails in a tilted position.
Figure 4 is a partial perspective view of a carrier and system according to the present disclosure.
Figure 5 is partial perspective view of a device according to the present disclosure when mounted on a carrier.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

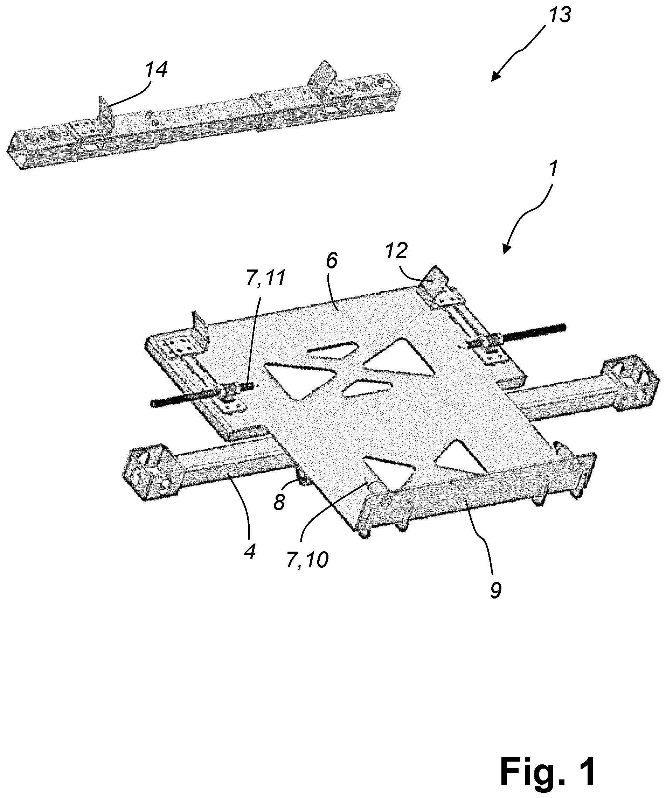

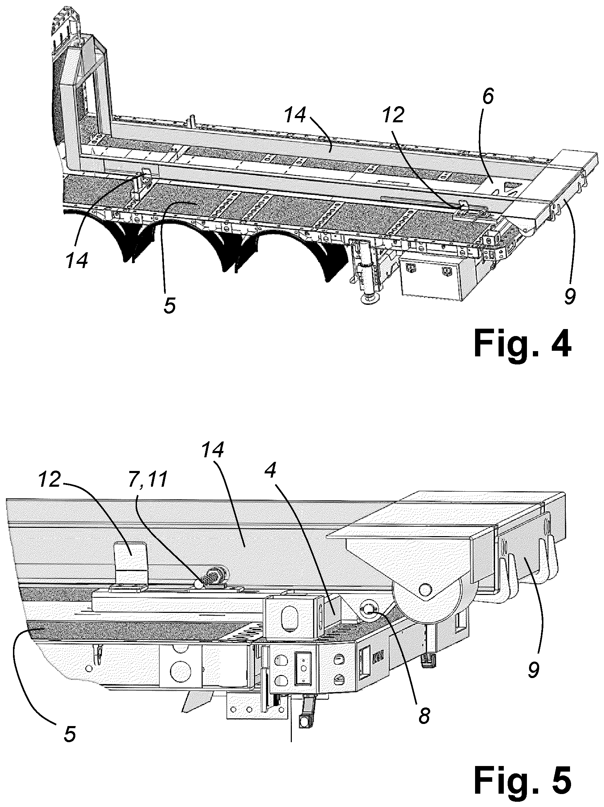

With reference to figure 1, a system 13 for adapting a carrier 2 with wheels and a crane 3 to various uses is shown. The system 13 comprises a device 1 That comprises a base attachment 4 adapted to be fixed to a container platform 5, see figure 5. The device 1 further comprises an attachment part 6 pivotably arranged to the base attachment 4, wherein the attachment part 6 comprises a locking part 7 for fixing a hooklift container to the device 1 in at least one direction. The attachment part 6 comprises guiding flanges 12 for facilitating correct placement of a hooklift container to be carried in the center The system 1 also comprises guiding flanges 14 to be arranged on a container platform 5 in front of the device 1.

In other words, with reference to figure 1, there is shown a system 13 configured for adapting a carrier 2, which includes wheels and a crane 3, for a variety of operational applications. The system 13 comprises a device 1 designed to interface with standard container equipment.

The device 1 includes a base attachment 4 which is adapted to be fixedly mounted on a container platform 5, as further illustrated in Figure 5. Pivotably connected to the base attachment 4 is an attachment part 6, which is designed to allow limited rotational or angular movement relative to the base.

The attachment part 6 incorporates a locking part 7, configured to securely engage and lock a hooklift container in at least one direction, thereby ensuring reliable attachment during loading, transport, and unloading operations. In addition, the attachment part 6 is equipped with guiding flanges 12, which serve to assist in the precise alignment and centralized placement of the hooklift container onto the device.

To further facilitate accurate positioning and stability of the container on the container platform 5, the system 13 also comprises additional guiding flanges 14, which are intended to be mounted on the container platform forward of the device 1. These additional flanges cooperate with those on the attachment part 6 to ensure that the container is correctly positioned and retained during operation.

In the shown embodiment, the locking part 7 consists of two different locking features: two elongate rods 11 arranged at a distance from each other and in line with each other and movable in the longitudinal direction of the rods 11 and an end plate 9 that is arranged to be supporting a rear end of a container and wherein the end plate further comprises two protrusions 10 for entering the end openings in the rails under a container as a further locking device.

As previously stated, in the illustrated embodiment, the locking part 7 comprises two distinct locking features, which cooperate to provide secure engagement of a container with the device 1.

The first locking feature includes a pair of elongate rods 11, arranged parallel to one another and spaced apart at a predetermined distance. These rods are aligned axially and are configured to be movable in their longitudinal direction, allowing them to be extended or retracted to engage or release structural components of a container. The rods may engage with corresponding slots, holes, or recesses on the container frame or rails, thereby restraining the container from movement in one or more directions.

The second locking feature consists of an end plate 9, which is positioned to support the rear end of a container when it is loaded onto the device. The end plate 9 is designed not only to bear weight but also to provide positional restraint. To that end, the end plate is equipped with two protrusions 10, which are dimensioned and spaced to correspond with the end openings of the rails typically located on the underside of standard hooklift containers. When the container is correctly positioned, the protrusions 10 are inserted into these rail openings, thereby serving as an additional locking mechanism to prevent unintended longitudinal or lateral displacement of the container during operation.

Together, these two locking features ensure that the container is securely fixed to the device both mechanically and positionally, enhancing safety and stability during transport and handling.

As further illustrated in the drawings, particularly in Figure 1, a set of hinges 8 is provided to operatively connect the base attachment 4 and the attachment part 6. These hinges 8 enable the attachment part 6 to pivot relative to the base attachment 4, thereby allowing angular adjustment of the attachment part to accommodate variations in container geometry or loading conditions.

The base attachment 4 itself is formed as an elongate beam, structurally reinforced and configured to extend transversely to the direction of movement of the carrier 2. This transverse orientation ensures stability and even distribution of loads when the system is integrated with the container platform. The attachment part 6 includes a substantially flat surface, specifically designed to support a portion of the lower side of a container. This flat part aids in maintaining proper horizontal alignment and prevents undesired rotation or tilting of the container when engaged.

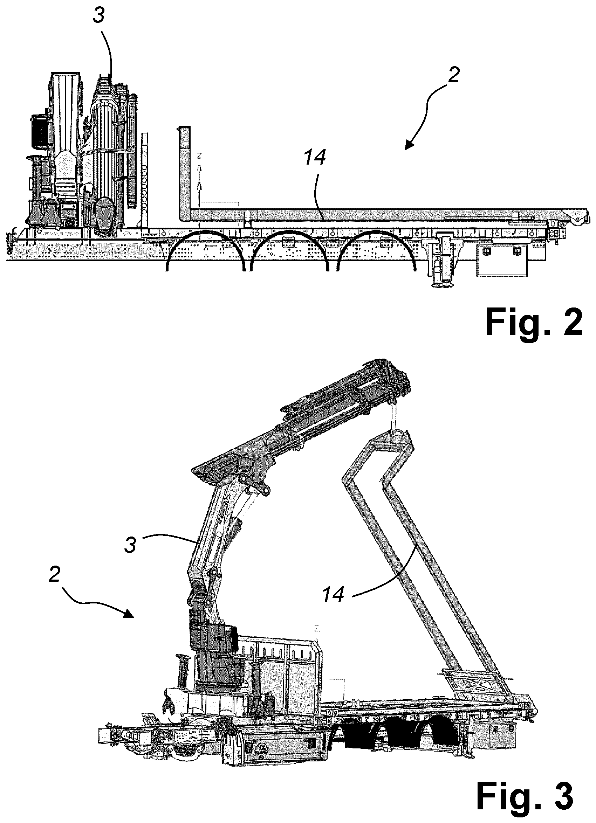

Referring now to Figures 2 and 3, partial side views are presented illustrating a truck in combination with the chassis 14 of a standard hooklift container. In Figure 2, the system is shown in a transportation mode, where the container lies in a horizontal, secured position on the carrier. In contrast, Figure 3 shows the system in a tilted mode, where the container is partially lifted-typically during unloading operations using the integrated crane.

Turning to Figure 4, a perspective view is provided, illustrating the system 13 in conjunction with the chassis 14 of a hooklift container. This view highlights the spatial arrangement and interaction of the device components with the container structure.

Finally, in Figure 5, the device 1 is depicted in its fully deployed configuration, where it is mounted onto a container platform 5 and locked to the chassis 14 of a hooklift container. This figure demonstrates the functional integration of the device with conventional transport equipment and underscores the adaptability of the invention for secure and efficient container handling.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

## Claims

1. A device (1) for adapting a carrier (2) with wheels and a crane (3) to various uses, **characterized in**
**that** the device (1) comprises a base attachment (4) adapted to be fixed to a container platform (5), wherein the device (1) further comprises an attachment part (6) pivotably arranged to the base attachment (4), wherein the attachment part (6) comprises a locking part (7) for fixing a hooklift container to the device (1) in at least one direction.

2. The device (1) according to claim 1, wherein hinges (8) are arranged to connect the base attachment (4) and the attachment part (6) to make the attachment part (6) pivotable in relation to the base attachment (4).

3. The device (1) according to claim 1, wherein the base attachment (4) is an elongate beam adapted to be arranged transverse to the moving direction of the carrier (2).

4. The device (1) according to any of the preceding claims, wherein the attachment part (6) comprises a flat part for supporting a part of a lower side of a container.

5. The device (1) according to claim 4, wherein an end plate (9) is arranged at one end of the flat part and at an angle towards one another.

6. The device (1) according to any of the preceding claims, wherein the attachment part (6) has at least one protrusion (10) for entering an end opening in a rail under a container.

7. The device (1) according to any of the claims 1 to 4, wherein an end plate (9) is arranged to be supporting a rear end of a container and wherein the end plate further comprises two protrusions (10) for entering the end openings in the rails under a container.

8. The device (1) according to any of the preceding claims, wherein the locking device (1) comprises two elongate rods (11) arranged at a distance from each other and in line with each other and movable in the longitudinal direction of the rods (11).

9. The device (1) according to any of the preceding claims, wherein the attachment part (6) comprises guiding flanges (12) for facilitating correct placement of a hooklift container to be carried in the center.

10. A system (13) for adapting a carrier (2) with wheels and a crane (3) to various uses, comprising a device (1) according to any of the preceding claims, wherein the system further comprises guiding flanges (14) to be arranged on a container platform (5) in front of said device (1).
